# EUROPÄISCHE PATENTSCHRIFT

(11) **EP 3 861 575 B1**
(45) Veröffentlichungstag und Bekanntmachung des Hinweises auf die Patenterteilung: **02.12.2026**
(21) Anmeldenummer: 19779911.7
(22) Anmeldetag: 04.10.2019
(51) Int. Cl.: A62C 3/16, B32B 33/00, B32B 5/02, B32B 5/26, B32B 7/12, B32B 15/085, B32B 15/09, B32B 15/14, B32B 15/18, B32B 15/20, B32B 27/08, B32B 27/12, B32B 27/32, B32B 27/36, H01M 50/293, H01M 10/658, H01M 50/256

(54) **BRANDSCHUTZVORRICHTUNG MIT VERBUNDSYSTEM, VERBUNDSYSTEM UND BATTERIE-PACK MIT BRANDSCHUTZVORRICHTUNG**
FIRE PROTECTION DEVICE WITH COMPOSITE SYSTEM, COMPOSITE SYSTEM AND BATTERY PACK HAVING FIRE PROTECTION DEVICE
DISPOSITIF DE PROTECTION CONTRE L'INCENDIE POURVU DE SYSTÈME COMPOSITE, SYSTÈME COMPOSITE ET BLOC-BATTERIE POURVU DE DISPOSITIF DE PROTECTION CONTRE L'INCENDIE

(30) Priorität: 05.10.2018 EP 18198784
(43) Veröffentlichungstag der Anmeldung: 11.08.2021
(73) Patentinhaber: Cuylits Holding GmbH, 49593 Bersenbrück (DE)
(72) Erfinder: WINTER, Florian, 49082 Osnabrück (DE); CUYLITS, Diederik, 49593 Bersenbrück (DE)
(74) Vertreter: Gille Hrabal Partnerschaftsgesellschaft mbB Patentanwälte
(86) Internationale Anmeldenummer: PCT/EP2019/076887
(87) Internationale Veröffentlichungsnummer: WO 2020/070275

(56) Entgegenhaltungen:
- EP-A1- 3 142 166
- EP-A1- 3 269 540
- WO-A1-02/32663
- WO-A1-2014/018107
- WO-A1-2018/195303
- WO-A1-2019/121641
- JP-A- H07 300 912
- US-A- 5 735 098
- US-A1- 2011 064 997
- US-A1- 2011 192 564

## Beschreibung

Die vorliegende Anmeldung betrifft die Herstellung eines Verbundsystems für eine Brandschutzvorrichtung.

In der Automobilindustrie gibt es derzeit einen Trend, Verbrennungsmotoren durch Elektromotoren oder eine Kombination aus Elektromotor und Verbrennungsmotor zu ersetzen und damit die Umweltauswirkungen von Automobilen durch die Reduzierung (Hybride) oder die vollständige Eliminierung (Elektrofahrzeuge) von Fahrzeugemissionen herabzusetzen. Dieser Wechsel in der Antriebstechnik ist jedoch nicht ohne technologische Hürden, da der Einsatz eines Elektromotors den Bedarf an kostengünstigen, wiederaufladbaren Batterien (Akkus) mit hoher Energiedichte, langer Lebensdauer und vielfältigen Einsatzbedingungen mit sich bringt. Darüber hinaus ist es unerlässlich, dass die Batterie eines Fahrzeugs weder während der Nutzung des Fahrzeugs noch während der Lagerung eine unangemessene Gesundheitsgefährdung darstellt.

Wiederaufladbare Batterien, wie Lithiumionen-Zellen, neigen eher dazu, thermisch durchzugehen ("thermal runaway") als Primärzellen. Ein thermisches Durchgehen tritt auf, wenn die interne Reaktionsgeschwindigkeit so weit ansteigt, dass mehr Wärme erzeugt wird, als entnommen werden kann, was zu einer weiteren Erhöhung sowohl der Reaktionsgeschwindigkeit als auch der Wärmeentwicklung führt. Schließlich ist die erzeugte Wärmemenge groß genug, dass sie zur Zerstörung der Batteriezelle (z.B. durch Überdruck (Zerbersten) oder durch Ausstoß von Gasen) führt. Außerdem kann es zu einer Brandentwicklung kommen.

Ein thermisches Durchgehen kann beispielsweise durch einen Kurzschluss innerhalb der Zelle, unsachgemäßen Gebrauch der Zelle, Herstellungsfehler oder extreme Außentemperaturen ausgelöst werden. Im Falle eines in einem Elektrofahrzeug verwendeten Batterie-Packs, welches mehrere Batteriezellen enthält, kann ein Autounfall Ursache dafür sein, dass gleichzeitig mehrere Zellen innerhalb des Batterie-Packs thermisch durchgehen.

Während eines thermischen Durchgehens wird eine große Menge an thermischer Energie schnell freigesetzt, wodurch die gesamte Zelle auf eine Temperatur von 850 °C oder mehr erhitzt wird. Durch die erhöhte Temperatur der thermisch durchgehenden Zelle wird die Temperatur benachbarter Zellen innerhalb des Batterie-Packs auch erhöht. Wenn sich die Temperatur der benachbarten Zellen ungehindert erhöht, können auch sie thermisch durchgehen. Dieser Kaskadeneffekt kann dazu führen, dass beim thermischen Durchgehen einer einzelnen Zelle am Ende alle Zellen im gesamten Batterie-Pack thermisch durchgehen.

Es gibt eine Reihe von Lösungsansätzen, um entweder das Risiko eines thermischen Durchgehens zu reduzieren oder um die Gefahr der Ausbreitung des thermischen Durchgehens zu reduzieren.

Batterie-Packs weisen ein Gehäuse auf, das zum Schutz der Batteriezellen dient und Vorrichtungen enthält, die der Klimatisierung und Steuerung der Batteriezellen dienen. Durch Einsatz von speziell entwickelten Gehäusen kann die Gefahr eines Kurzschlusses während der Lagerung und/oder Handhabung reduziert werden.

Aus der US 2005/01700238 A1 ist ein Batteriegehäuse aus einem Glasfaser-verstärkten Kunststoff bekannt.

Aus der US 2012/0225331 A1 ist ein Batterie-Pack bekannt, bei dem innerhalb eines Gehäuses aus stabilem Material eine Schutzlage aus einem Glasfasermaterial, das mit einem Polymer beschichtet ist, angeordnet ist. Versagt eine Batterie, so hält das Gewebe die entstehenden Gase zurück. Das Gehäuse nimmt die entstehenden Kräfte auf.

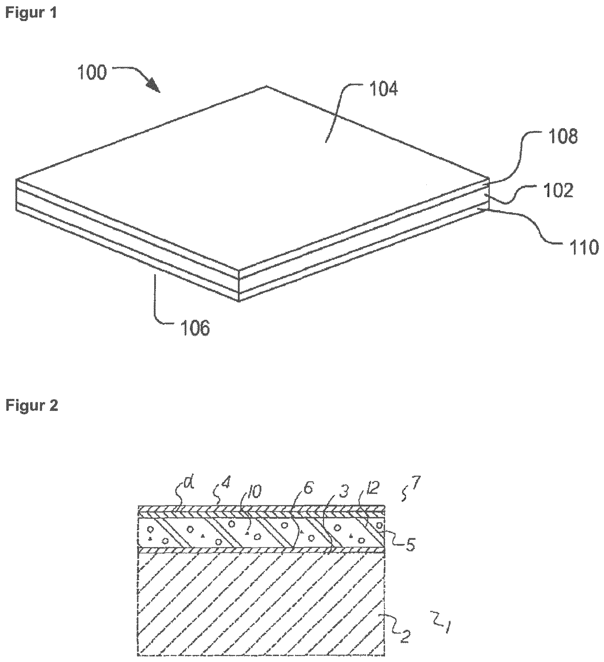

Aus der US 2011/0192564 A ist ein Verbundsystem bekannt, welches zum Schutz von Batterien verwendet wird. Das Verbundsystem ist in der Figur 1 dargestellt, wonach die obere Schicht 108 eine Klebstoffschicht darstellt, über welche das Verbundsystem mit einem elektrischen Energiespeicher, wie einer Batterie, verbunden wird. An diese Klebstoffschicht schließt sich eine Schaumstoffschicht (102) an, die wiederum mit einer Außenschicht (110) verbunden ist. Die Außenschicht kann gemäß der US 2011/0192564 A ein Glasfaservlies sein. In dieser Anordnung sind ablativ-wirkende Verbindungen gegebenenfalls in der Schaumstoffschicht (102) vorhanden. Nachteilig an diesem aus der US 2016/0192564 A bekannten Aufbau ist, dass im Fall einer Hitzewirkung die ablativ-wirkende Verbindung nur innerhalb des Verbundsystems wirken kann und damit deren Funktionsweise eingeschränkt ist. Eine unmittelbare Einwirkung der ablativ-wirkenden Verbindung auf die Batterie ist durch die zwischen Brandschutzschicht und Batterie vorgesehene Klebstoffschicht eingeschränkt.

Aus der US 2011/064997 A ist eine Batterie bekannt, welche in einem Gehäuse vorgesehen ist. Das Gehäuse wird einerseits durch eine Ionomer-Schicht gebildet, die unmittelbar in Kontakt steht mit der elektrochemischen Zelle. Weiter nach außen hin verlagert (d. h. auf der der elektrochemischen Zelle gegenüberliegenden Seite der Ionomer-Schicht) ist ein Glasfaservlies vorgesehen. Im Rahmen der Lehre der US 2011/064997 A kann die Ionomer-Schicht einen intumeszierenden Bestandteil, wie Graphit, enthalten. Das in der Lehre der US 2011/064997 A verwendete Glasfaservlies dient somit als Trägerschicht und ist nicht unmittelbar auf das Gehäuse der elektrochemischen Zelle (Batterie) aufgezogen. Dieses aus dem Stand der Technik bekannte Verbundsystem weist den Nachteil auf, dass das verwendete Glasfaservlies als Trägermaterial keine ausreichende Steifigkeit aufweist und somit ein formstabiles Prägen des Verbundsystems nicht möglich ist. Darüber hinaus ist die Herstellung einer mit einer intumeszierenden Verbindung versehenen Ionomer-Schicht aufwendig und kostenintensiv. WO 2014/018107 A betrifft ein Laminat als Feuerbarriere zur Verwendung in der thermischen und akustischen Isolierung. In einem konkreten Ausführungsbeispiel wird ein Polyetheretherketon-Film auf einer Seite mit einem Gittergewebe und einem Wärmesiegel sowie auf der anderen Seite des Polyetheretherketon-Films mit einer Silikonklebstoffschicht, einer Glasfaserschicht und einer Feuerbarriereschicht versehen. Die Herstellung des sechsgliedrigen Laminats ist aufwendig, da insbesondere in einem separaten Verfahrensschritt auf den Silikonklebstoff zunächst ein Glasfasergewebe und anschließend eine Feuerbarriereschicht aufgetragen wird. Darüber hinaus ist das Verbundmaterial nicht für eine plastische Verformung geeignet, da keine der genannten Schichten eine ausreichende Steifigkeit aufweist.

JP H07300912 A offenbart ein Verbundsystem, welches in der Figur 2 dargestellt ist. Demnach wird auf eine untere Schicht, welche die Trägerschicht 2 darstellt und durch eine Glasfasergewebeschicht gebildet wird, eine Klebeschicht aufgetragen. Diese Klebeschicht ist mit dem Bezugszeichen 6 versehen. Daran anschließend wird eine wärmesenkende Schicht 10 auf der Klebeschicht angeordnet. Diese wärmesenkende Schicht 10 kann ein ablativ-wirkendes Mittel enthalten. Daran anschließend wird eine nicht-brennbare Schicht 4 angeordnet. Der resultierende Verbundkörper umfasst somit ein Glasfasergewebe als Trägermaterial, welches für eine plastische Verformbarkeit in der Regel keine ausreichende Steifigkeit aufweist. Darüber hinaus ist die Herstellung aufwendig und kostenintensiv.

US 5,735,098 beschreibt eine Brandschutzzusammensetzung, die eine ablativ-wirkende Verbindung und Glasfaser enthält. Die Brandschutzzusammensetzung dieses Standes der Technik umfasst jedoch weder ein Glasfaservlies, noch ein Trägermaterial, dass eine ausreichende Steifigkeit besitzt, um einen möglicherweise resultierenden Verbundkörper plastisch zu verformen.

Es besteht aber weiterhin Bedarf, Maßnahmen bereitzustellen, die eine aufgrund eines thermischen Durchgehens einer oder mehrerer Batteriezellen in einem Batterie-Pack erzeugte Hitze und/oder erzeugten Brand eindämmen oder sogar im Ansatz ersticken, um ein Übergreifen der Hitze und/oder des Brandes auf weitere Komponenten der die Batteriezellen enthaltenen Vorrichtung zu verhindern. Diese Maßnahmen sollen vorzugsweise auch das Übergreifen eines externen Brands auf das Batterie-Pack vermeiden oder zumindest einschränken.

Darüber hinaus hat sich erfindungsgemäß herausgestellt, dass ein thermisches Durchgehen von Batterien zumindest teilweise mit einem Bersten der Batterie verbunden ist, wodurch sich brennende Metallpartikel lösen können und eine Brandschutzvorrichtung, die um die Batterie angeordnet ist, durchschlagen können. Daher ergibt sich als weitere Anforderung an erfindungsgemäße Brandschutzvorrichtungen, dass diese stabil gegen brennende Metallpartikel, die durch das Bersten der Batterie entstehen können, sind.

Diese Aufgaben werden gelöst durch ein Verfahren zur Herstellung eines Verbundsystems für eine Brandschutzvorrichtung, umfassend die Verfahrensschritte:
i) Bereitstellen eines Glasfaservlieses oder Glasfasergewebes,
ii) Penetrieren des Glasfaservlieses oder Glasfasergewebes mit einer Brandschutzzusammensetzung, welche mindestens eine ablativ-wirkende Verbindung umfasst, um eine Brandschutzschicht zu erhalten, wobei das Penetrieren dergestalt durchgeführt wird, dass das resultierende penetrierte Glasfaservlies oder Glasfasergewebe einschichtig ausgebildet ist und ein Flächengewicht von 400 g/m² bis 600 g/m² aufweist,
iii) Bereitstellen einer Trägerschicht,
iv) Verbinden der Trägerschicht mit der Brandschutzschicht über eine Klebeschicht,
dadurch gekennzeichnet, dass die Menge an ablativ-wirkender Verbindung in der Brandschutzzusammensetzung mindestens 60 Gew.-%, bezogen auf das Gesamtgewicht der Brandschutzzusammensetzung beträgt, wobei die Trägerschicht eine Silikatfasernadelmatte umfasst.

Eine solche Brandschutzvorrichtung, welche beispielsweise als Matte oder Platte ausgebildet sein kann, kann zum Beispiel als Hitze- und/oder Brandschutz unter dem Gehäusedeckel eines Batterie-Packs für den Einsatz in Fahrzeugen angebracht werden, um einerseits die Batteriezellen vor äußeren Temperaturen und/oder Feuereinwirkung zu schützen und andererseits ein Übergreifen von Hitze und/oder Feuer auf weitere Komponenten des Fahrzeugs und/oder die Fahrgastzelle beim thermischen Durchgehen von Batteriezellen zu verhindern.

Dabei ist in einer bevorzugten Ausgestaltung insbesondere vorgesehen, dass das Verbundsystem mit der Brandschutzschicht, welche die mindestens eine ablativ-wirkende Verbindung enthält, zur Batterie hin angeordnet ist.

In einer weiteren bevorzugten Ausgestaltung ist insbesondere vorgesehen, dass das Verbundsystem mit der Brandschutzschicht, welche die mindestens eine ablativ-wirkende Verbindung enthält, in unmittelbarem Kontakt mit der Batterie angeordnet ist. Im Rahmen der vorliegenden Erfindung wird unter dem Merkmal " eines unmittelbaren Kontakts mit der Batterie" verstanden, dass keine weitere Schicht des erfindungsgemäßen Verbundsystem zwischen der (Außenseite der) Batterie und dem Verbundsystem vorgesehen ist; nicht zwingend ist eine berührender Kontakt zwischen Batteriegehäuse und der Brandschutzschicht.

Wenn im Rahmen der vorliegenden Erfindung eine unmittelbare Anordnung der Brandschutzschicht auf dem Batteriegehäuse vorgesehen ist, wird vermieden, dass die Funktionsweise der in dieser Brandschutzschicht enthaltenden ablativ-wirkenden Verbindung im Brandfall mit einem Aufplatzen des verwendeten Verbundsystems einhergeht. Daher ist es für die vorliegende Erfindung von Vorteil, wenn die Schicht, enthaltend die ablativ-wirkende Verbindung, d.h. die Brandschutzschicht unmittelbar in Kontakt steht mit dem aus dem Gehäuse der Batterie.

Alternativ kann die Brandschutzvorrichtung als Transportbehälter ausgebildet sein und beispielsweise als Transportsack für Lithium-Ionen-Akkus dienen. In dieser Ausführungsform besitzt die Brandschutzvorrichtung vorzugsweise eine Öffnung, beispielsweise eine formschlüssige Verschlussvorrichtung wie einen Reißverschluss oder einen Klettverschluss, durch die das Batterie-Pack eingefügt und entnommen werden kann.

Wenn die erfindungsgemäße Brandschutzvorrichtung als Transportbehälter ausgebildet ist, ist es bevorzugt, wenn die Brandschutzvorrichtung eine plastische Verformbarkeit aufweist. Zu diesem Zweck wird insbesondere eine Silikatfasernadelmatte als Trägermaterial empfohlen, die weiter unten näher beschrieben wird.

Die Brandschutzvorrichtung umfasst ein Verbundsystem und gegebenenfalls eine Hülle, in deren Inneren das Verbundsystem angeordnet ist.

Das aus dem erfindungsgemäßen Verfahren resultierende Verbundsystem weist mindestens drei Schichten auf:
(a1) eine Trägerschicht,
(a2) eine Klebeschicht und
(a3) eine Brandschutzschicht.

Im Folgenden werden die einzelnen Schichten näher beschrieben:

### Trägerschicht

Die Trägerschicht des aus dem erfindungsgemäßen Verfahren resultierenden Verbundsystems, die im Allgemeinen gleichzeitig als Isolationsschicht ausgebildet ist, kann starr oder flexibel ausgebildet sein.

Die Trägerschicht umfasst Silikatfasernadelmatten.

Bevorzugt enthält die Trägerschicht eine Silikatfasernadelmatte, deren Silikatfasern Faserstärken im Bereich von 5 bis 20 µm, bevorzugt von 6 bis 12 µm aufweisen. Weiterhin werden bevorzugt Silikatfasernadelmatten mit einer Dichte von 120 bis 180 kg/m³, vorzugsweise im Bereich von 150 kg/m³ eingesetzt, wobei die Silikatfasernadelmatte des Weiteren vorzugsweise ein Nennflächengewicht von 500 bis 2000 g/m², weiter bevorzugt 600 bis 1500 g/m², noch weiter bevorzugt 700 bis 1300 g/m², aufweist und wobei bevorzugt eine Nenndicke von 2 bis 15 mm, weiter bevorzugt 3 bis 12 mm, noch weiter bevorzugt 4 bis 8 mm, vorgegeben ist. Es hat sich gezeigt, dass durch die vorgeschlagene Auswahl des Trägermaterials ein formstabiles Verbundsystem resultiert. Die erfindungsgemäß vorgesehene Silikatfasernadelmatte weist darüber hinaus den Vorteil auf, dass das resultierende Verbundsystem plastisch verformbar ist.

Entsprechende Silikatfasernadelmatten sind kommerziell erhältlich und werden üblicherweise mittels Nadeltechnik und bevorzugt ohne Zugabe von Bindemitteln hergestellt. Die Silikatfasernadelmatten werden vorzugsweise ausschließlich aus Silika-Glasfasern gebildet, wobei die Silika-Glasfasern zu mindestens 94 Gew.-% aus SiO₂, weiter bevorzugt mindestens 96 Gew.-% SiO₂, hergestellt sind, so dass die resultierende Silikatfasernadelmatte eine ausreichende Temperaturbeständigkeit aufweist. Entsprechende Silikatfasernadelmatten weisen sich durch ihre hervorragenden Isolationseigenschaften sowie gute Vibrationsbeständigkeit aus. Sie haben eine sehr gute chemische Beständigkeit, hohe physikalische Eigenschaften und eine hohe mechanische Belastbarkeit, was ihre Anwendung als Trägermaterial insbesondere bevorzugt macht, da das erfindungsgemäße Verbundsystem vorzugsweise plastisch verformbar ist.

Die Trägerschicht ist über eine Klebeschicht mit einer Brandschutzschicht verbunden.

### Klebeschicht

Die Klebeschicht des aus dem erfindungsgemäßen Verfahren resultierenden Verbundsystems, kann beispielsweise einen thermoplastischen Polymerfilm, Synthese-Kautschuk, Wasserglas, Polyurethan, oder Acrylat enthalten. Je nach Inhaltsstoff und Füllmaterialien unterscheidet man eine Thermoplastenklebeschicht, eine Sprühkleberklebeschicht (Synthese-Kautschuk), eine Acrylatkleberklebeschicht oder eine Brandschutzkleberklebeschicht (Wasserglas). Geeignete thermoplastische Polymere umfassen beispielsweise Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC). Besonders bevorzugt enthält die Klebeschicht einen thermoplastischen Polyethylenfilm.

### Brandschutzschicht

Die Brandschutzschicht des aus dem erfindungsgemäßen Verfahren resultierenden Verbundsystems, enthält vorzugsweise ein Glasfaservlies oder Glasfasergewebe, das mit einer Brandschutzzusammensetzung, umfassend die mindestens eine ablativ-wirkende Verbindung, penetriert ist, derart, so dass das resultierende penetrierte Glasfaservlies oder Glasfasergewebe einschichtig ausgebildet ist und ein Flächengewicht von 400 g/m² bis 600 g/m² aufweist.

Vorzugsweise enthält das Glasfaservlies oder das Glasfasergewebe Glasfasern aus AES-Glas, E-Glas, ECR-Glas, Silika-Glas, S-Glas, R-Glas, M-Glas, C-Glas, D-Glas, AR-Glas, T-Glas und/oder Q-Glas enthält. Hierbei ist E-Glas bevorzugt.

Diese Materialien eignen sich auch für die Ausbildung der Trägerschicht (nicht erfindungsgemäß). Auch in dieser Ausgestaltung werden das Glasfaservlies oder das Glasfasergewebe so ausgewählt, dass eine plastische Verformbarkeit des resultierenden Verbundsystems gegeben ist. Entsprechende Materialien für das Glasfaservlies oder das Glasfasergewebe sind dem Fachmann per se bekannt.

Bevorzugt enthält die Brandschutzschicht ein Glasfaservlies. Glasfaservliese sind in vielen Ausführungen und für diverse Anwendungen bekannt. Ebenfalls bekannt sind Verfahren zur Herstellung von Glasfaservliesen aus Glasfasern und Binder sowie ggf. weiteren Additiven. Die Additive können bestimmte Eigenschaften, beispielsweise den Heißwasserwiderstand, des fertigen Glasfaservlieses verbessern.

Es ist bevorzugt, dass das Flächengewicht des Glasfaservlieses zwischen 40 g/m² und 60 g/m² liegt.

Die Glasfasern des Glasfaservlieses haben bevorzugt eine Länge im Bereich von 2 mm bis 10 mm, bevorzugt im Bereich von 3 bis 8 mm und besonders bevorzugt im Bereich von 4 bis 7 mm.

Was das Bindemittel des Glasfaservlieses betrifft, so besteht hier ein erheblicher Spielraum. Besonders vorteilhafte Bindemittel sind Harnstoffharze, modifizierter Polyvinylalkohol, Polyacrylsäure, Wassergläser, PU-Bindemittel und Mischungen der vorgenannten Bindemittel. Ganz besonders bevorzugt wird ein modifizierter Polyvinylalkohol als Bindemittel eingesetzt.

Das Glasfaservlies oder das Glasfasergewebe wird mit einer Brandschutzzusammensetzung penetriert. Die Brandschutzzusammensetzung enthält zwingend mindestens eine ablativ-wirkende Verbindung. Es ist besonders bevorzugt, dass das Glasfaservlies oder das Glasfasergewebe zwei oder mehr ablativ-wirkende Verbindungen enthält. Die Menge an ablativ-wirkender Verbindung in der Brandschutzzusammensetzung beträgt mindestens 60 Gew.-%, bezogen auf das Gesamtgewicht der Brandschutzzusammensetzung.

Aufgrund der Porosität des Glasfaservlieses bzw. Glasfasergewebes kann die Brandschutzzusammensetzung in das Vlies bzw. Gewebe einpenetrieren. Durch die Durchtränkung des Vlieses bzw. Gewebes resultiert eine einschichtige Struktur aus Glasfaservlies / Glasfasergewebe und Beschichtungszusammensetzung.

Eine ablativ-wirkende Verbindung ist eine Verbindung, die unter Hitzeeinwirkung kühlend wirkt. Dabei wird durch endotherme Vorgänge gebundenes Wasser freigesetzt und ein Kühleffekt erzeugt. Zur Erzielung dieser Ablationskühlung können als ablativ-wirkende Verbindung vorzugsweise solche verwendet werden, die keramisierend, verkohlend, sublimierend oder aufblähbar sind.

In einer bevorzugten Ausführungsform wird mindestens eine ablativ-wirkende Verbindung verwendet, die keramisiert. Durch die Keramisierung wird beispielsweise ein Durchschlagen von Flammen verhindert.

Bevorzugte ablativ-wirkende Verbindung sind ausgewählt aus der Gruppe bestehend aus LiNO₃·3H₂O, Na₂CO₃H₂O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP 1 069 172 A2), Mg(OH)₂, Al(OH)₃, Al(OH)₃·3H₂O, AIOOH (Böhmit), Al₂[SO₄]₃·nH₂O mit n = 14 - 18, KAI(SO₄)₂·12H₂O (EP 1 069 172 A2), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Ca₆Al₂[(OH)₁₂|(SO₄)₃]·26H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O (Scarbroit), Al₁₄(CO₃)₃(OH)₃₆ (Hydrogranat), 3CaO·Al₂O₃·6H₂O (Dawsonit), NaAl(OH)CO₃, Al(OH)₃ (Hydrargillit, ATH), wasserhaltige Zeolithe, Vermikulite, Colemanit, Perlite, Glimmer, Alkalisilikate, Borax, modifizierten Kohlen, Graphiten, Kieselsäuren und Gemischen davon.

In einer bevorzugten Ausführunsgform der Erfindung umfasst die ablativ-wirkende Verbindung Glimmer, Vermikulite und/oder Ettringit, insbesondere Glimmer, Vermikulite und/oder synthetisches Ettringit.

In einer bevorzugten Ausführungsform der Erfindung umfasst die ablativ-wirkende Verbindung Ettringit. In einer ganz bevorzugten Ausführungsform der Erfindung umfasst die ablativ-wirkende Verbindung synthetisches Ettringit.

Ettringit (Ca₆Al₂[(OH)₁₂|(SO₄)₃] 26 H₂O) ist ein selten vorkommendes Mineral aus der Mineralklasse der wasserhaltigen Sulfate mit fremden Anionen. Synthetisches Ettringit wird beispielsweise in Form von wässrigen Suspensionen angeboten. Die wässrigen Suspensionen können ferner organische Bindemittel auf Polymerbasis, wie zum Beispiel Acrylate, umfassen.

In einer weiteren bevorzugten Ausführungsform der Erfindung umfasst die ablativ-wirkende Verbindung Al(OH)₃ (Hydrargillit, ATH).

Al(OH)₃ wird bei Temperaturen über 200 °C in Aluminiumoxid und Wasser gespalten. Das Wasser kühlt den Brandherd und verdünnt die entstehenden Gase. Das entstehende Aluminiumoxid bildet eine keramische Schutzschicht aus.

In einer bevorzugten Ausführungsform umfasst die Brandschutzzusammensetzung zwei oder mehr ablativ-wirkende Verbindungen. Es ist weiter bevorzugt, dass die Brandschutzzusammensetzung zwei ablativ-wirkende Verbindungen umfasst. In diesem Fall ist es ganz besonders bevorzugt, dass die ablativ-wirkende Verbindung synthetisches Ettringit und Al(OH)₃ umfasst.

Die Menge an ablativ-wirkender Verbindung in der Brandschutzzusammensetzung beträgt mindestens 60 Gew.-%, noch mehr bevorzugt mindestens 70 Gew.-% und ganz besonders bevorzugt mindestens 75 Gew.-%, jeweils bezogen auf das Gesamtgewicht der Brandschutzzusammensetzung.

Um die anwendungstechnischen Eigenschaften der Brandschutzzusammensetzung und/oder die Brandschutzwirkung der Brandschutzschicht zu verbessern, kann die Brandschutzzusammensetzung weitere Inhaltsstoffe enthalten.

Diese weiteren Inhaltsstoffe können insbesondere Entschäumungsmittel, Lösungsmittel, Bindemittel, Verdickungsmittel und/oder Blähglas umfassen.

Zur Herstellung der Brandschutzzusammensetzung werden die Inhaltsstoffe in einem Dissolver bei Raumtemperatur (25 °C) homogenisiert.

Die Brandschutzzusammensetzung wird einseitig oberflächig auf das Glasfaservlies oder das Glasfasergewebe aufgebracht. Dies kann beispielsweise mittels Rakeln oder Walzen erfolgen. Anschließend wird das beschichtete Glasfaservlies oder Glasfasergewebe, beispielsweise mit Hilfe eines Trocknungstunnels bei Temperaturen um 190 °C, getrocknet.

Das Flächengewicht der Brandschutzschicht liegt zwischen 400 g/m² und 600 g/m².

### Weitere optionale Schichten

Das aus dem erfindungsgemäßen Verfahren resultierende Verbundsystem kann auch mindestens eine Edelstahlfolie als Durchstoßbarriere für brennende Metallpartikel aus der Batterie aufweisen. Entsprechende Schichtdicken der Edelstahlfolien können zwischen 0,02 bis 0,40 mm, weiter bevorzugt 0,04 bis 0,30 mm, noch weiter bevorzugt 0,05 bis 0,20 mm, betragen.

### Allgemeine Beschreibung des aus dem erfindungsgemäßen Verfahren resultierenden Verbundsystems

Das Verbundsystem befindet sich vorzugsweise im Inneren einer Hülle. Diese Hülle kann einoder mehrschichtig ausgebildet sein. Insbesondere bevorzugt ist die Hülle flüssigkeitsdicht. Die Dicke der Hülle beträgt vorzugsweise zwischen 100 und 200 µm.

Die Hülle ist insbesondere bevorzugt mehrschichtig aufgebaut und kann beispielsweise eine Verbundfolie aus Polyethylenterephthalat, Aluminium und Polyethylen (PET/AI/PE) oder Polyethylenterephthalat und Polyethylen (PET/PE) umfassen. Auch Kunststofffolien im Allgemeinen und selbst klebende Folien können verwendet werden.

Das Verbundsystem kann beispielsweise unter Vakuum oder ohne Vakuum in die Hülle eingeschweißt werden. Nach dem Einbringen des Verbundsystems in die Hülle kann die Brandvorrichtung mit einem oder mehr Fenster(n) und/oder einer bestimmten Kontur versehen werden. Alternativ kann das Verbundsystem vor dem Einschweißen in die Hülle mit einem oder mehr Fenster(n) und/oder einer bestimmten Kontur versehen werden.

Das Verbundsystem ist ein wichtiges Zwischenprodukt bei der Herstellung der Brandvorrichtung.

### Aufbau des aus dem erfindungsgemäßen Verfahren resultierenden Verbundsystems

Das Verbundsystem kann eine oder mehrere Schichten aufweisen, die ausgewählt werden aus
a) einer oder mehreren wie zuvor beschriebenen gegebenenfalls beschichteten Glasfaservliesen und/oder Glasfasergeweben (mit einer verstärkenden Beschichtung);
b) einer oder mehreren Edelstahlfolien;
c) einer oder mehreren Trägerschichten; und
d) einer oder mehreren Brandschutzschichten,
wobei die einzelnen Schichten in der Regel über Klebeschichten miteinander verbunden sind,

Das Verbundsystem weist beispielsweise den folgenden Aufbau auf:

| | |
|---|---|
| Schicht 1: | Brandschutzschicht mit einem Glasfaservlies, wobei die Brandschutzschicht nach außen des Verbundsystems gerichtet ist; |
| Schicht 2: | Edelstahlfolie; |
| Schicht 3: | mit einer verstärkenden Beschichtung versehenes Glasfasergewebe oder Glasfaservlies; |
| Schicht 4: | Trägerschicht; |
| Schicht 5: | Brandschutzschicht mit einem Glasfaservlies, wobei die Brandschutzschicht nach außen des Verbundsystems gerichtet ist. |

Ein weiteres Verbundsystem weist beispielsweise den folgenden Aufbau auf:

| | |
|---|---|
| Schicht 1: | Brandschutzschicht mit einem Glasfaservlies; |
| Schicht 2: | Brandschutzschicht mit einem Glasfaservlies (identisch oder verschieden zur Schicht 1); |
| Schicht 3: | Edelstahlfolie; |
| Schicht 4: | mit einer verstärkenden Beschichtung versehenes Glasfasergewebe oder Glasfaservlies; |
| Schicht 5: | Trägerschicht; |
| Schicht 6: | Brandschutzschicht mit einem Glasfaservlies (identisch oder verschieden zu den Schichten 1 und 2); und |
| Schicht 7: | Brandschutzschicht mit einem Glasfaservlies (identisch oder verschieden zu den Schichten 1, 2 und 7). |

Des Weiteren wird in der vorliegenden Anmeldung ein Verbundsystem beschrieben (nicht erfindungsgemäß), enthaltend
(a1) eine Trägerschicht,
(a2) eine Klebeschicht und
(a3) eine Brandschutzschicht, welche mindestens eine ablativ-wirkende Verbindung enthält. Bezüglich bevorzugter Ausführungsformen des Verbundsystems gilt *mutatis mutandis* das für die Brandschutzvorrichtung Gesagte.

Die Brandvorrichtung kann insbesondere in Form einer Matte oder Platte ausgeführt sein und Bestandteil eines Batterie-Packs zur Verwendung in einem tragbaren Gerät (zum Beispiel einem Smartphone oder einem Tablet-Computer) oder einem Elektrofahrzeug sein. Die Brandvorrichtung kann insbesondere Bestandteil eines Batterie-Packs mit mindestens einer wiederaufladbaren Lithiumionen-Batteriezelle zur Verwendung in einem tragbaren Gerät oder einem Elektrofahrzeug sein.

Des Weiteren wird in der vorliegenden Anmeldung ein Batterie-Pack beschrieben (nicht erfindungsgemäß), umfassend
(i) ein Gehäuse,
(ii) mindestens eine wiederaufladbare Lithiumionen-Batteriezelle,
(iii) eine Brandschutzvorrichtung, umfassend
   (a)ein Verbundsystem, enthaltend
      (a1) eine Trägerschicht,
      (a2) eine Klebeschicht und
      (a3) eine Brandschutzschicht, welche mindestens eine ablativ-wirkende Verbindung enthält,
      und
   (b)gegebenenfalls eine Hülle, in deren Inneren das Verbundsystem angeordnet ist.

In diesem Batterie-Pack ist die Brandschutzschicht des Verbundsystems vorzugsweise in Richtung der wiederaufladbaren Lithiumionen-Batteriezelle angeordnet. Zwischen der wiederaufladbaren Lithiumionen-Batteriezelle und der Brandschutzschicht des Verbundsystems kann eine Seite der gegebenenfalls vorhandenen Hülle angeordnet sein.

Bezüglich bevorzugter Ausführungsformen des Batterie-Pack gilt *mutatis mutandis* das für die Brandschutzvorrichtung Gesagte. Wiederaufladbare Lithium-Batteriezellen umfassen insbesondere wiederaufladbare Lithium-Cobaltdioxid-Batteriezellen, wiederaufladbare Lithiumtitanat-Batteriezellen, wiederaufladbare Lithium-Mangan-Batteriezellen, wiederaufladbare Lithium-Eisenphosphat-Batteriezellen, wiederaufladbare Lithium-Luft-Batteriezellen, wiederaufladbare Dual-Carbon-Batteriezellen und/oder Lithium-Polymer-Batteriezellen. Üblicherweise weist ein Batterie-Pack mehrere, in Reihe geschaltete wiederaufladbare Lithium-Batteriezellen auf. Das Batterie-Pack kann weitere Komponenten enthalten. Als weitere Komponente ist insbesondere ein Batterie-Management-System (BMS) enthalten. Das Batterie-Management-System ist vorzugsweise eine elektronische Schaltung, welche zur Überwachung, Regelung und zum Schutz der wiederaufladbaren Lithiumionen-Batteriezelle(n) dient. Batterie-Packs sind üblicherweise austauschbar gestaltet und verfügen über lösbare elektrische Kontakte.

## Patentansprüche

1. Verfahren zur Herstellung eines Verbundsystems für eine Brandschutzvorrichtung, umfassend die Verfahrensschritte:
i) Bereitstellen eines Glasfaservlieses oder Glasfasergewebes,
ii) Penetrieren des Glasfaservlieses oder Glasfasergewebes mit einer Brandschutzzusammensetzung, welche mindestens eine ablativ-wirkende Verbindung umfasst, um eine Brandschutzschicht zu erhalten, wobei das Penetrieren dergestalt durchgeführt wird, dass das resultierende penetrierte Glasfaservlies oder Glasfasergewebe einschichtig ausgebildet ist und ein Flächengewicht von 400 g/m² bis 600 g/m² aufweist,
iii) Bereitstellen einer Trägerschicht,
iv) Verbinden der Trägerschicht mit der Brandschutzschicht über eine Klebeschicht,
**dadurch gekennzeichnet, dass** die Menge an ablativ-wirkender Verbindung in der Brandschutzzusammensetzung mindestens 60 Gew.-%, bezogen auf das Gesamtgewicht der Brandschutzzusammensetzung beträgt, wobei die Trägerschicht eine Silikatfasernadelmatte umfasst.

2. Das Verfahren zur Herstellung eines Verbundsystems gemäß Anspruch 1, **dadurch gekennzeichnet, dass** die ablativ-wirkende Verbindung Ettringit, vorzugsweise synthetisches Ettringit, umfasst.

3. Das Verfahren zur Herstellung eines Verbundsystems gemäß Anspruch 1, **dadurch gekennzeichnet, dass** die ablativ-wirkende Verbindung Al(OH)₃ Hydrargillit-ATH umfasst.

4. Das Verfahren zur Herstellung eines Verbundsystems gemäß einem der Ansprüche 1 bis 3, **dadurch gekennzeichnet, dass** die ablativ-wirkende Verbindung synthetisches Ettringit und Al(OH)₃ Hydrargillit-ATH umfasst.

5. Das Verfahren zur Herstellung eines Verbundsystems gemäß einem der Ansprüche 1 bis 4, **dadurch gekennzeichnet, dass** das Glasfaservlies oder das Glasfasergewebe Glasfasern aus AES-Glas, E-Glas, ECR-Glas, S-Glas, R-Glas, M-Glas, C-Glas, D-Glas, AR-Glas, T-Glas und/oder Q-Glas enthält.

## Claims

1. A method for manufacturing a composite system for a fire protection device, comprising the method steps:
i) providing a glass fiber nonwoven or glass fiber woven fabric,
ii) penetrating the glass fiber nonwoven or glass fiber woven fabric with a fire protection composition comprising at least one ablative compound to obtain a fire protection layer, wherein the penetration is carried out such that the resulting penetrated glass fiber nonwoven or glass fiber woven fabric is formed as a single layer and has a basis weight of 400 g/m² to 600 g/m² ,
iii) providing a carrier layer,
iv) bonding the carrier layer to the fire-retardant layer via an adhesive layer,
**characterized in that** the amount of ablative compound in the fire-retardant composition is at least 60% by weight, based on the total weight of the fire-retardant composition, wherein the carrier layer comprises a silicate fiber needle mat.

2. The method for manufacturing a composite system according to claim 1, **characterized in that** the ablative compound comprises ettringite, preferably synthetic ettringite.

3. The method for producing a composite system according to claim 1, **characterized in that** the ablative compound comprises Al(OH)₃ hydrargillite-ATH.

4. The method for producing a composite system according to any one of claims 1 through 3, **characterized in that** the ablative compound comprises synthetic ettringite and Al(OH)₃ hydrargillite-ATH.

5. The method for producing a composite system according to any one of claims 1 through 4, **characterized in that** the glass fiber nonwoven or the glass fiber woven fabric comprises glass fibers made of AES glass, E-glass, ECR glass, S-glass, R-glass, M-glass, C-glass, D-glass, AR-glass, T-glass, and/or Q-glass.

## Revendications

1. Procédé de fabrication d'un système composite destiné à un dispositif de protection contre l'incendie, comprenant les étapes:
i) fournir un non-tissé de verre ou un tissu en fibres de verre,
ii) pénétrir le non-tissé ou le tissu en fibres de verre avec une composition de protection contre l'incendie, qui comprend au moins un composé à effet ablatif, afin d'obtenir une couche de protection contre l'incendie, la pénétration étant réalisée de telle sorte que le non-tissé de verre ou le tissu en fibres de verre imprégné qui en résulte soit monocouche et présente un grammage de 400 g/m² à 600 g/m²,
iii) mise en place d'une couche de support,
iv) assembler la couche de support à la couche de protection contre l'incendie à l'aide d'une couche adhésive,
**caractérisé en ce que** la quantité de composé à effet ablatif dans la composition de protection contre l'incendie est d'au moins 60 % en poids, par rapport au poids total de la composition contre l'incendie, la couche de support comprenant un matelas de fibres de silicate en forme d'aiguilles.

2. Procédé de fabrication d'un système composite selon la revendication 1, **caractérisé en ce que** le composé à effet ablatif comprend de l'ettringite, de préférence de l'ettringite synthétique.

3. Procédé de fabrication d'un système composite selon la revendication 1, **caractérisé en ce que** le composé à effet ablatif comprend de l'Al(OH)₃ hydrargillite-ATH.

4. Procédé de fabrication d'un système composite selon l'une des revendications 1 à 3, **caractérisé en ce que** le composé à effet ablatif comprend de l'ettringite synthétique et de l'Al(OH)₃ hydrargillite-AT₎.

5. Procédé de fabrication d'un système composite selon l'une des revendications 1 à 4, **caractérisé en ce que** le non-tissé de verre ou le tissu en fibres de verre contient des fibres de verre en verre AES, en verre E, en verre ECR, en verre S, en verre R, en verre M, en verre C, de verre D, de verre AR, de verre T et/ou de verre Q.
